# EUROPÄISCHE PATENTSCHRIFT

(11) **EP 3 228 174 B1**
(45) Veröffentlichungstag und Bekanntmachung des Hinweises auf die Patenterteilung: **13.03.2019**
(21) Anmeldenummer: 17153941.4
(22) Anmeldetag: 31.01.2017
(51) Int. Cl.: A01D 41/12

(54) **WURFROTOR EINER GUTVERTEILEINRICHTUNG FÜR EINE SELBSTFAHRENDE ERNTEMASCHINE**
SPREADING ROTOR OF A GOODS DISTRIBUTION DEVICE FOR A SELF-PROPELLED HARVESTING MACHINE
ROTOR D'ÉJECTION D'UN DISPOSITIF DE DISTRIBUTION POUR UNE MOISSONNEUSE AUTOMOTRICE

(30) Priorität: 06.04.2016 DE 102016106229
(43) Veröffentlichungstag der Anmeldung: 11.10.2017
(73) Patentinhaber: CLAAS Selbstfahrende Erntemaschinen GmbH, 33428 Harsewinkel (DE)
(72) Erfinder: Kucerin, Sergej, 32602 Vlotho (DE)
(74) Vertreter: CLAAS Gruppe

(56) Entgegenhaltungen:
- EP-A1- 2 225 929
- EP-A1- 2 286 654
- WO-A1-2017/008161
- DE-U1-202016 102 139
- GB-A- 2 121 664

## Beschreibung

Die vorliegende Erfindung betrifft Wurfrotor für eine Gutverteileinrichtung einer selbstfahrenden Erntemaschine, der um eine Drehachse in eine Drehrichtung drehbar ist, wobei der Wurfrotor Mitnehmer aufweist, die zum Beschleunigen von Erntegut, insbesondere von gehäckseltem Erntegut, vorgesehen und drehfest um die Drehachse verteilt angeordnet sind, wobei die Mitnehmer in Mitnehmergruppen gruppiert sind, die gleichmäßig um die Drehachse verteilt angeordnet sind. Die vorliegende Erfindung betrifft zudem eine Gutverteileinrichtung mit einem solchen Wurfrotor sowie eine selbstfahrende Erntemaschine mit einer solchen Gutverteileinrichtung.

Bei der Getreide- oder Rapsernte mittels eines Mähdreschers wird das von einem Erntevorsatz bodennah abgeschnittene Erntegut von einer Vielzahl Aggregaten, die zur Förderung und/oder zur Verarbeitung des ihn durchlaufenden Erntegutstromes vorgesehen sind, verarbeitet. Dafür wird es mittels eines Vorsatzgerätes des Mähdreschers aufgenommen und über einen Schrägförderer in eine Dresch- und Trenneinrichtung gefördert. Die Dresch- und Trenneinrichtung weist häufig mehrere Trommeln auf, um einen hohen Erntegutdurchsatz bei geringen Körnerverlusten zu ermöglichen. Dafür umfasst sie eine Vorbeschleunigungstrommel, die in Förderrichtung des Ernteguts vor einer Dreschtrommel angeordnet ist. Die ausgedroschenen Körner oder Früchte werden anschließend über einen Vorbereitungsboden und über mehrere Siebe einer Reinigungsvorrichtung, die die Körner oder Früchte von der Spreu trennt, einem Körnerelevator zugeführt, der sie in einen Korntank transportiert.

Das ausgedroschene Halmgut wird über eine der Dresch- und Trenneinrichtung zugeordnete Strohwendetrommel einer Einrichtung zur Restkornabscheidung zugeführt. Die Restkornabscheidung ist beispielsweise aus mehreren Hordenschüttlern gebildet, die schwingend bewegt werden und dabei Restkorn aus Nichtkornbestandteilen wie Halmen und Stroh abscheiden. Das abgeschiedene Restkorn gelangt dann über einen Rücklaufboden zu den Sieben einer Reinigungsvorrichtung. Alternativ ist die Restkornabscheidung beispielsweise als Axialrotor ausgebildet und weist ein den Rotor radial umschließendes, zumindest teilweise siebartig ausgebildetes Abscheidegehäuse auf. Bei dieser Ausführungsform werden die Nichtkornbestandteile mit dem Rotor zum Heck des Mähdreschers gefördert, wobei das in ihnen befindliche Restkorn durch den Abscheidekorb abgeschieden wird und über den Rücklaufboden zu den Sieben der Reinigungsvorrichtung gelangt. Am Heck verlassen die Nichtkornbestandteile den Mähdrescher. Dabei können sie mittels eines Häckslers zerkleinert oder ungehäckselt als Schwad auf dem Boden abgelegt werden.

Gehäckselte Nichtkornbestandteile sollen möglichst gleichmäßig über den Boden verteilt werden, um den Boden gleichmäßig mit Nährstoffen anzureichern. Denn es hat sich gezeigt, dass eine ungleichmäßige, insbesondere streifige, Verteilung der Nichtkornbestandteile zu einem entsprechend ungleichmäßigen Erntegutbild im Folgejahr führt.

Die Druckschrift EP 1 277 387 B1 offenbart dafür einen Mähdrescher mit einem Häcksler und daran anschließenden Wurfgebläsen, die gegensätzlich zueinander rotieren. Die Wurfgebläse weisen flexible Wurfschaufeln auf, die sich in radiale und axiale Richtung erstrecken. Jedem Wurfgebläse ist ein Wandungsteil zugeordnet, das in einem Raum zwischen den Wurfgebläsen um die Drehachse des ihm zugeordneten Wurfgebläses schwenkbar ist. Das Wandungsteil bildet eine Abrisskante für das Erntegut, die sich parallel der jeweiligen Drehachse erstreckt. Das Erntegut verlässt das Wurfgebläse jeweils, wenn die Wurfschaufeln die Abrisskante passieren. Durch Verschwenken des Wandungsteils um die Drehachse kann die Richtung des Gutstromes verändert werden, in der das Erntegut das Wurfgebläse verlässt.

Die Druckschrift EP 2 225 929 A1 nutzt zur Gutverteilung Leitbleche, wobei jedem Wurfgebläse ein Wandungsleitblech zugeordnet ist, das sich zumindest teilweise konzentrisch um die Drehachse seines Wurfgebläses erstreckt. Die Wurfgebläse dieser Ausführungsform weisen anstelle der flexiblen Wurfschaufeln vertikal übereinander angeordnete Zinken zum Austragen des Gutstromes auf. Das ihnen jeweils zugeordnete Wandungsleitblech weist eine schräge Abrisskante auf, die in einem Winkel zu einer parallel der axialen Richtung verlaufenden Linie angeordnet ist. Aufgrund der Schräge der Abrisskante löst sich das Erntegut von den Zinken jeweils sowohl zeitlich als auch räumlich versetzt. Es wird daher in verschiedene Einwurfbereiche am Boden geworfen.

Es hat sich aber gezeigt, dass das Erntegut bei feuchten Erntebedingungen oftmals so stark aneinander haftet, dass es zu einem ungleichmäßigen, streifigen Austragen des Erntegutes kommt, so dass die nassen Nichtkornbestandteile nicht ausreichend gleichmäßig am Boden verteilt werden.

Aufgabe der Erfindung ist es, eine alternative Gutverteileinrichtung für eine selbstfahrende Erntemaschine, insbesondere einen Mähdrescher, zu schaffen, die auch unter feuchten Erntebedingungen ein gleichmäßiges Wurfbild ermöglicht, sowie die selbstfahrende Erntemaschine mit der Gutverteileinrichtung.

Die Aufgabe wird gelöst mit einem Wurfrotor für eine Gutverteileinrichtung einer selbstfahrenden Erntemaschine mit den Merkmalen des unabhängigen Patentanspruchs 1, einer Gutverteileinrichtung mit den Merkmalen des Patentanspruchs 13 sowie mit einer selbstfahrenden Erntemaschine mit den Merkmalen des Patentanspruchs 15. Vorteilhafte Ausführungsformen sind den abhängigen Ansprüchen entnehmbar.

Dafür wird ein Wurfrotor für eine Gutverteileinrichtung geschaffen. Der Wurfrotor erstreckt sich bevorzugt konzentrisch um eine Drehachse. Er ist um diese in eine Drehrichtung drehbar. Bevorzugt ist er dafür drehfest an einer um die Drehachse drehbaren Drehwelle angeordnet.

Er weist Mitnehmer auf, die zum Beschleunigen von Erntegut, insbesondere von gehäckseltem Erntegut, vorgesehen sind. Die Mitnehmer sind drehfest um die Drehachse verteilt angeordnet.

Die Mitnehmer sind in Mitnehmergruppen gruppiert, wobei die Mitnehmergruppen in Drehrichtung um die Drehachse gleichmäßig verteilt angeordnet sind. Dafür sind sie um die Drehachse in Drehrichtung um einen Versatzwinkel zueinander versetzt. Dadurch wird das mit den Mitnehmern der Mitnehmergruppen transportierte Erntegut jeweils mit gleichem zeitlichem Versatz ausgeworfen.

Der Wurfrotor zeichnet sich dadurch aus, dass jeweils die Mitnehmer derselben Mitnehmergruppe in eine Befestigungsrichtung um eine Befestigungsachse zu ihrem in axialer Richtung benachbarten Mitnehmer um einen Auswurfdrehwinkel oder um ein Vielfaches des Auswurfdrehwinkels verdreht angeordnet sind.

Der Auswurfdrehwinkel beeinflusst die Kraft, mit der das von einem Mitnehmer transportierte Erntegut gehalten wird. Bei einem zu flachen Auswurfdrehwinkel ist die beim Beschleunigen auf das Erntegut wirkende Fliehkraft so groß, dass das Erntegut entlang seinem Mitnehmer gleitet. Es haftet dann nicht ausreichend lange am Mitnehmer, so dass es vom Wurfrotor zu früh ausgeschleudert wird. Bei einem zu steilen Auswurfdrehwinkel kann das Erntegut hingegen nicht leicht genug entlang dem Mitnehmer gleiten. Die auf das Erntegut wirkende Fliehkraft ist dann zu klein, um das Erntegut aus dem Wurfrotor auszuwerfen. Es wird dann zu lange im Wurfrotor gehalten. Die zeitliche Dauer, in der das Erntegut im Wurfrotor gehalten wird, ist daher mit dem Auswurfdrehwinkel einstellbar. Der Auswurfdrehwinkel ist bevorzugt so dimensioniert, dass sichergestellt ist, dass das Erntegut einerseits mit dem Wurfrotor beschleunigt wird, und sich andererseits vom Mitnehmer löst.

Durch den Versatz der Mitnehmer um den Auswurfdrehwinkel oder um ein Vielfaches des Auswurfdrehwinkels wird das mit den Mitnehmern derselben Mitnehmergruppe gehaltene Erntegut daher verschieden stark im Wurfrotor gehalten. Es wird somit zu unterschiedlichen Zeitpunkten aus dem Wurfrotor ausgeworfen. Dabei bewirkt ein steiler Auswurfdrehwinkel eine späte, und ein flacher Auswurfdrehwinkel eine frühe Abgabe des Ernteguts aus dem Wurfrotor. Da der Zeitpunkt, an dem das Erntegut aus dem Wurfrotor ausgeworfen wird, einen Drehwinkel um die Drehachse bestimmt, in dem es ausgeworfen wird, beeinflusst der Auswurfdrehwinkel auch die Richtung, in der es ausgeworfen wird.

In Abhängigkeit vom Auswurfdrehwinkel wird feuchtes Erntegut durch die um den Auswurfdrehwinkel versetzten Mitnehmer derselben Mitnehmergruppe daher verschieden lange im Wurfrotor gehalten und zu verschiedenen Zeitpunkten ausgeworfen. Es wird daher in verschiedene Richtungen ausgeworfen, und in verschiedene Einwurfbereiche am Boden eingeworfen. Es hat sich gezeigt, dass dadurch auch bei feuchten Witterungsverhältnissen noch eine ausreichend gleichmäßige Verteilung des Ernteguts, und somit ein gleichmäßiges Wurfbild, erzielbar ist.

Um die Mitnehmer im Wurfrotor zu befestigen, weist dieser bevorzugt Befestigungsstege auf. Die Befestigungsstege erstrecken sich vorzugsweise jeweils entlang der Befestigungsachse. Vorzugsweise ist für jede Mitnehmergruppe jeweils ein Befestigungssteg vorgesehen. Die Mitnehmer der Mitnehmergruppe sind bevorzugt drehfest am Befestigungssteg befestigt. Damit die Mitnehmergruppen gleichmäßig in Drehrichtung um die Drehachse verteilt angeordnet sind, ist es bevorzugt, die Befestigungsstege gleichmäßig um die Drehachse verteilt anzuordnen, insbesondere um den Versatzwinkel zueinander versetzt.

In einer bevorzugten Ausführungsform sind die Mitnehmer derselben Mitnehmergruppe zudem um einen Befestigungswinkel um die Drehachse zueinander versetzt angeordnet. Dadurch sind die Mitnehmer derselben Mitnehmergruppe in Drehrichtung weiter voneinander beabstandet. Es hat sich gezeigt, dass das Erntegut dadurch sehr locker verteilt wird.

Besonders bevorzugt sind die Mitnehmer des Wurfrotors in einer Draufsicht auf den Wurfrotor in Drehrichtung gleichmäßig verteilt angeordnet. Dabei können mehrere Mitnehmer derselben Mitnehmergruppe und/oder mehrere Mitnehmer benachbarter Mitnehmergruppen in demselben Drehwinkel zur Drehachse angeordnet sein. Besonders bevorzugt sind sie zudem in demselben Auswurfdrehwinkel angeordnet. Dadurch sind sie in axialer Richtung übereinander angeordnet. Das Auswerfen des Erntegutes erfolgt dann nicht schubweise mit dem durch den Versatzwinkel zwischen den Mitnehmergruppen verursachten zeitlichen Versatz, sondern während einer Umdrehung des Wurfrotors etwa kontinuierlich.

Weiterhin bevorzugt weisen die Mitnehmer eine Wurfkante auf, die bogenförmig ausgebildet ist. Auch die bogenförmige Wurfkante beeinflusst die Kraft, mit der das Erntegut vom Mitnehmer gehalten wird. Es hat sich gezeigt, dass die bogenförmige Wurfkante, insbesondere im Vergleich zu einer geradlinig verlaufenden Wurfkante, das Erntegut besser am Mitnehmer hält.

Die Mitnehmer sind bevorzugt plattenförmig ausgebildet. Solche plattenförmig ausgebildeten Mitnehmer haben sich als vorteilhaft erwiesen. Sie sind bevorzugt quer zur Drehachse angeordnet. Im Vergleich zu Mitnehmern, die als Zinken ausgebildet sind, sind sie erheblich robuster. Vorzugsweise sind die Mitnehmer aus einem Flachbandmaterial hergestellt, insbesondere gestanzt oder geschnitten / gelasert.

Vorzugsweise sind die Mitnehmer derselben Mitnehmergruppe in einer axialen Richtung der Drehachse um denselben Abstand voneinander beabstandet. Dadurch kann mit den Mitnehmern etwa dieselbe Erntegutmenge transportiert werden.

Dabei ist es bevorzugt, dass sich jeweils eine Anordnung der Mitnehmer der Mitnehmergruppen relativ zueinander für alle Mitnehmergruppen wiederholt. Dadurch verteilt sich das mit den Mitnehmern der Mitnehmergruppen ausgeworfene Erntegut jeweils in gleicher Weise am Boden.

An einem in axialer Richtung unteren Ende des Wurfrotors ist bevorzugt ein Rotorboden, und an einem in axialer Richtung oberen Ende des Wurfrotors ist weiterhin bevorzugt ein Befestigungsflansch angeordnet. Der Befestigungsflansch und der Rotorboden begrenzen einen Auswurfraum für das Erntegut bevorzugt in und gegen die axiale Richtung. Die Mitnehmer sind weiterhin bevorzugt zwischen dem Rotorboden und dem Befestigungsflansch angeordnet. Vorzugsweise sind sie drehfest zwischen dem Rotorboden und dem Befestigungsflansch befestigt.

Der Auswurfraum wird weiterhin bevorzugt in einer radialen Richtung der Drehachse durch ein Wandungsleitblech, das dem Wurfrotor zugeordnet ist, teilweise begrenzt. Das Wandungsleitblech erstreckt sich bevorzugt zumindest teilweise konzentrisch um die Drehachse. Bevorzugt ist auch ein bogenförmiger oder geradliniger Verlauf des Wandungsleitbleches. Das Wandungsleitblech begrenzt teilweise den Auswurfraum in einer radialen Richtung. Es verhindert in diesem Bereich ein Auswerfen des Erntegutes in radialer Richtung aus dem Wurfrotor.

Das Wandungsleitblech weist bevorzugt eine Abrisskante für das Erntegut auf. Die Abrisskante erstreckt sich vorzugsweise in einem Winkel zu einer parallel der axialen Richtung der Drehachse verlaufenden Linie. Sie kann sich geradlinig oder geringfügig bogenförmig vorgesehen sein. Das von einem Mitnehmer transportierte Erntegut kann den Wurfrotor erst verlassen, wenn der Mitnehmer die Abrisskante des Wandungsbleches passiert. Mitnehmer, die auf derselben axialen Höhe angeordnet, aber in Drehrichtung zueinander verdreht sind, passieren die Abrisskante zu verschiedenen Zeitpunkten. Sie werfen das Erntegut daher zeitlich zueinander versetzt aus.

Um die Begrenzung des Auswurfraumes und/oder die Position der Abrisskante zu verändern, kann das Wandungsleitblech des Wurfrotors in und gegen die Drehrichtung verstellbar, insbesondere verdrehbar und/oder verschiebbar, sein. Vorzugsweise ist dies manuell möglich. Es ist aber auch ein Wurfrotor bevorzugt, bei dem das Wandungsleitblech automatisch, insbesondere elektrisch oder hydraulisch, verstellbar ist.

Es ist weiterhin bevorzugt, das Wandungsleitblech mehrteilig auszubilden, wobei zumindest ein erstes, die Abrisskante aufweisendes Blechteil des Wandungsleitbleches in und gegen die Drehrichtung verstellbar ist. Auch dies kann manuell oder automatisch erfolgen. Dadurch ist die Position der Abrisskante veränderbar.

Die Aufgabe wird weiterhin gelöst mit einer Gutverteileinrichtung für eine selbstfahrende Erntemaschine, insbesondere für einen Mähdrescher. Die Gutverteileinrichtung weist zumindest einen solchen Wurfrotor auf, mit dem das Erntegut am Boden verteilbar ist. Das Erntegut wird mit dem Wurfrotor verteilt. Dabei bewirkt der Auswurfdrehwinkel zwischen den Mitnehmern einer Mitnehmergruppe, dass das Erntegut verschieden lange im Wurfrotor gehalten wird. Es löst sich daher mit einem zeitlichen Versatz von den Mitnehmern der Mitnehmergruppe. Daher wird es in Abhängigkeit vom Auswurfdrehwinkel zudem in verschiedene Einwurfbereiche am Boden verteilt.

Bevorzugt weist die Gutverteileinrichtung zwei in gegensätzliche Drehrichtungen drehbare Wurfrotoren auf. Dadurch ist das Erntegut in gegensätzliche Richtungen aus dem Wurfrotor auswerfbar. Vorzugsweise ist die Drehrichtung der Wurfrotoren so vorgesehen, dass das Erntegut in voneinander abgewandte Richtungen verteilt wird.

Dabei ist es bevorzugt, dass die Wurfrotoren so aufeinander abgestimmt sind, dass sie das Erntegut zu beiden Seiten über eine gleiche Verteilbreite verteilen. Es ist aber ebenfalls bevorzugt, die Verteilbreite, insbesondere durch Verdrehen und/oder Verschieben der Wandungsleitbleche, gezielt so zu verändern, dass einer der Wurfrotoren Erntegut über eine kleinere Verteilbreite als der andere Wurfrotor verteilt. Eine solche Einstellung der Wandungsleitbleche der Wurfrotoren kann beispielsweise an Feldrändern des bearbeiteten Feldes sinnvoll sein.

Die Aufgabe wird weiterhin gelöst mit einer selbstfahrenden Erntemaschine mit einer solchen Gutverteileinrichtung. Die Gutverteileinrichtung ermöglicht ein sehr gleichmäßiges und zudem lockeres Verteilen von Erntegut. Vorzugsweise ist sie am Heck der Erntemaschine angeordnet. Besonders bevorzugt ermöglicht sie ein Verteilen des Erntegutes über eine gesamte Arbeitsbreite der Erntemaschine, insbesondere in aneinander angrenzende Einwurfbereiche.

Die Erntemaschine ist bevorzugt ein Mähdrescher. Die Gutverteileinrichtung ist aber auch für andere Erntemaschinen verwendbar.

Die vorliegende Erfindung wird nachstehend anhand von in den Zeichnungen dargestellten Ausführungsbeispielen näher erläutert. Es zeigen:
- Fig. 1: zeigt schematisch eine Seitenansicht eines selbstfahrenden Mähdreschers nach dem Stand der Technik;
- Fig. 2: zeigt eine erste Ausführungsform eines Wurfrotors, und zwar in (a) in einer perspektivischen Ansicht, und in (b) in einer Draufsicht;
- Fig. 3: zeigt eine zweite Ausführungsform eines Wurfrotors, und zwar in (a) in einer perspektivischen Ansicht, und in (b) in einer Draufsicht; und
- Fig. 4: zeigt eine Gutverteileinrichtung mit zwei Wurfrotoren, und zwar in (a) in einer perspektivischen Ansicht, in (b) die Gutverteileinrichtung in der perspektivischen Ansicht aus (a), wobei ein Rotorboden einer der Wurfrotoren nicht dargestellt ist, und in (c) die Gutverteileinrichtung aus (a) und (b) in einer Draufsicht; und
- Fig. 5: schematisch eine durch einen Wurfrotor bewirkte Erntegutverteilung am Boden.

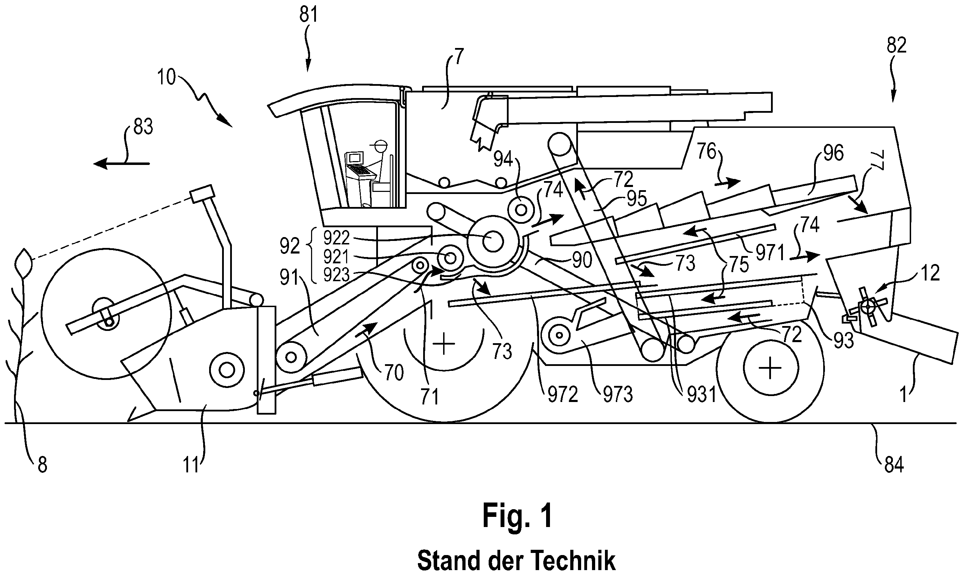

Fig.1 zeigt schematisch eine Seitenansicht einer selbstfahrenden Erntemaschine 10 nach dem Stand der Technik. Die selbstfahrende Erntemaschine 10 ist hier ein Mähdrescher. Im Folgenden werden daher die Begriffe selbstfahrende Erntemaschine 10 und Mähdrescher synonym verwendet. Die Erfindung ist aber nicht auf Mähdrescher beschränkt, sondern erstreckt sich auch auf andere selbstfahrende Erntemaschinen 10, bei denen die Notwendigkeit besteht, aufgenommenes Erntegut 8 am Boden 84 zu verteilen.

An einer Front 81 des Mähdreschers 10 weist dieser zur Aufnahme des Ernteguts 8 ein Vorsatzgerät 11 auf, mit dem das Erntegut 8 während einer Erntefahrt bodennah abgeschnitten wird. Dabei fährt der Mähdrescher 10 in eine Fahrtrichtung 83. Mit dem Vorsatzgerät 11 wird das Erntegut 8 währenddessen in einem Erntegutstrom 71 in eine Förderrichtung 70 einem Schrägförderer 91 zugeführt, der es in den Mähdrescher 10 fördert.

Sodann wird das Erntegut 8 einer Drescheinrichtung 92 zugeführt, die eine Vorbeschleunigungstrommel 921 sowie eine dieser in Förderrichtung 70 nachgeordnete Dreschtrommel 922 umfasst. Aufgrund der Vorbeschleunigung des Ernteguts 8 mittels der Vorbeschleunigungstrommel 921 ist ein hoher Erntegutdurchsatz bei geringem Körnerverlust möglich.

Ein überwiegend aus Körnern oder Früchten 72 bestehendes Korn-Spreu-Gemisch 73 wird an einem Abscheidekorb 923 der Dresch- und Trenneinrichtung 92 abgeschieden. Das Korn-Spreu-Gemisch 73 wird anschließend über einen Vorbereitungsboden 972 einer Reinigungsvorrichtung 93, die hier durch gestrichelte Linien schematisch dargestellt ist, und die die Körner oder Früchte 72 von Nichtkornbestandteilen, insbesondere von Spreu und Halmteilen 74, trennt, einem Körnerelevator 95 zugeführt. Mit dem Körnerelevator 95 werden die Körner oder Früchte 72 in einen Korntank 7 transportiert.

Zum Trennen der Körner oder Früchte 72 von den Spreu und den Halmteilen 74 ist ein Gebläse 973 vorgesehen, dessen Luftstrom (nicht gezeigt) die Spreu und Halmteile 74 zum rückwärtigen Heck 82 des Mähdreschers 10 bläst. Am Heck 82 verlassen die Spreu und Halmteile 74 den Mähdrescher 10.

Das mit der Dresch- und Trenneinrichtung 92 ausgedroschene, überwiegend aus Stroh 77 bestehende Halmgut 76 wird über eine Strohwendetrommel 94 einer Einrichtung zur Restkornabscheidung 96 zugeführt. Diese ist hier aus Hordenschüttlern 96 gebildet. Im Folgenden werden die Begriffe Restkornabscheidung 96 und Hordenschüttler daher synonym verwendet. Die Erfindung ist aber nicht auf Mähdrescher 10 mit einer als Hordenschüttler ausgebildeten Restkornabscheidung 96 beschränkt, sondern bezieht sich auch auf Mähdrescher 10 mit einer anders ausgebildeten Restkornabscheidung 96, beispielsweise mit einer als Axialrotor ausgebildeten Restkornabscheidung 96.

Die Hordenschüttler 96 fördern das Halmgut 76 zum Heck 82 des Mähdreschers 10. Dabei werden sie schwingend bewegt. Dadurch werden noch im Halmgut 76 verbliebene Restkörner oder Restfrüchte 75 vom Stroh 77 getrennt.

Die Restkörner oder Restfrüchte 75 fallen auf einen Rücklaufboden 971, der sie zum Vorbereitungsboden 972 fördert. Von dort aus werden sie zu Sieben 932 der Reinigungsvorrichtung gefördert, die in einem Siebkasten 93 angeordnet sind. Im Folgenden werden die Begriffe Reinigungsvorrichtung und Siebkasten 93 synonym verwendet. Die dargestellte Reinigungsvorrichtung 93 weist zwei Siebe 932 auf. Prinzipiell kann sie aber noch weitere Siebe 932 aufweisen. In der Reinigungsvorrichtung 93 werden, wie oben bereits beschrieben, die Spreu und Halmteile 74 von den Körnern oder Früchten 72 getrennt.

Am Heck 82 verlässt das Stroh 77 den Mähdrescher 10. Der dargestellte Mähdrescher 10 weist dafür einen Strohhäcksler 12 auf, mit dem das Stroh 77 zerkleinert wird. Zudem ist eine Gutverteileinrichtung 1 vorgesehen, die das gehäckselte Stroh 77 am Boden 84 verteilt.

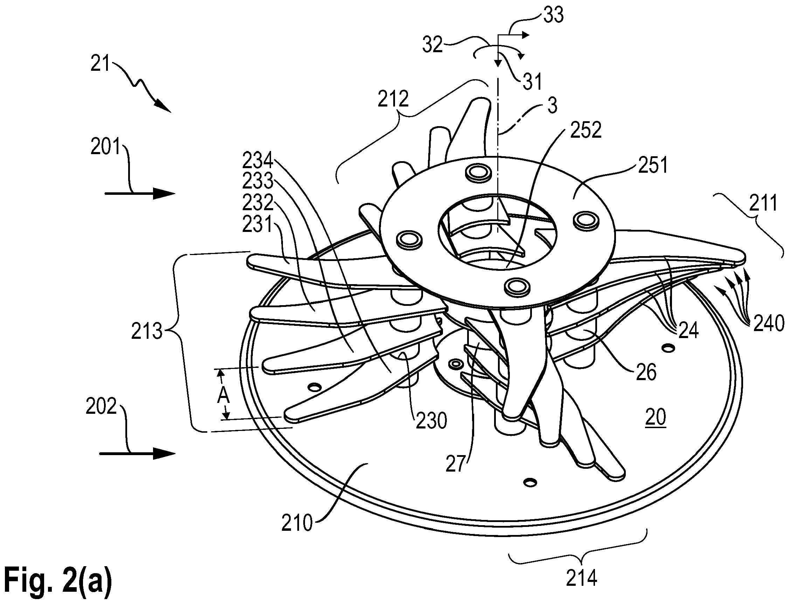

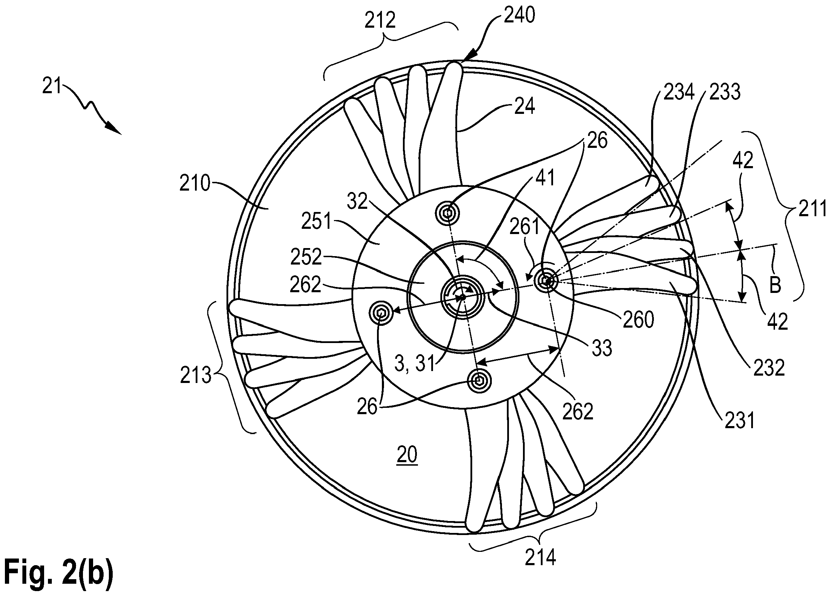

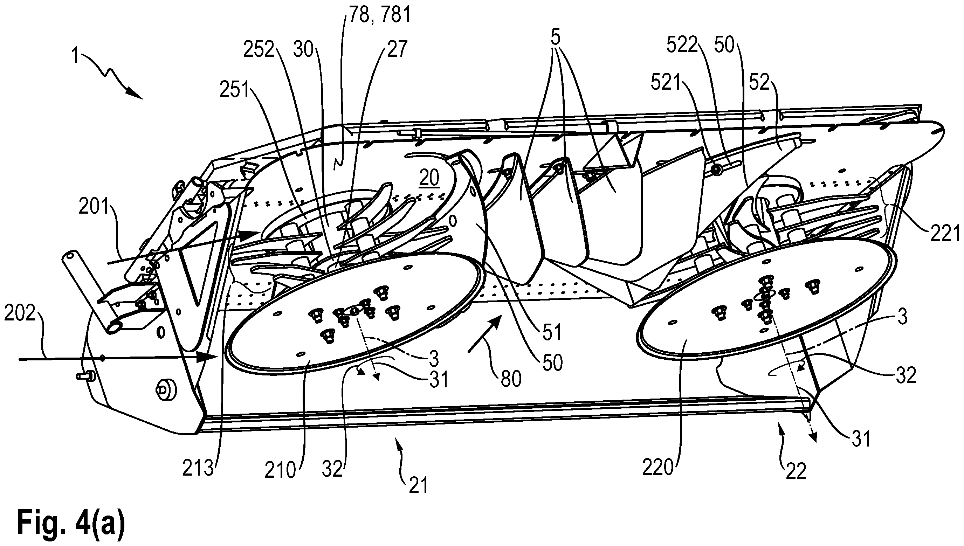

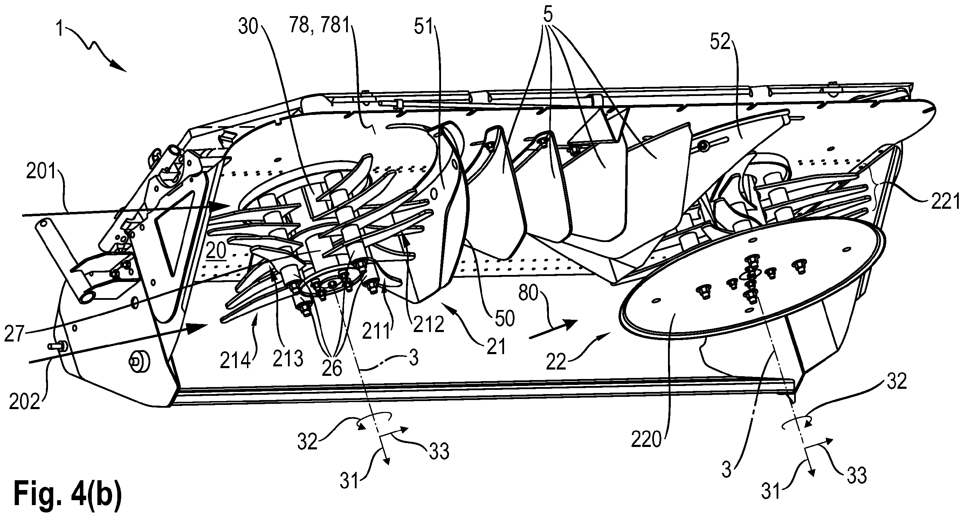

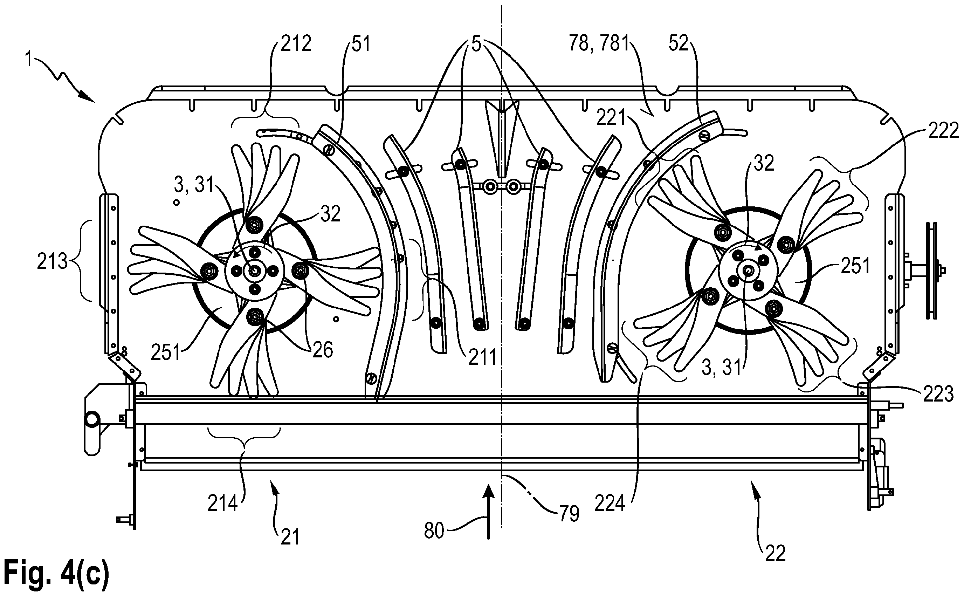

Fig. 2 zeigt in (a) und (b) eine erste Ausführungsform eines erfindungsgemäßen Wurfrotors 21. Der Wurfrotor 21 ist drehfest an einer um eine Drehachse 3 drehbaren Drehwelle 30 (s. Figur 4) anordbar. Er weist Mitnehmer 231, 232, 233, 234 auf, die zum Beschleunigen von Erntegut 8, vorzugsweise von gehäckseltem Erntegut 8, vorgesehen sind.

Die Mitnehmer 231, 232, 233, 234 sind in Mitnehmergruppen 211, 212, 213, 214 gruppiert angeordnet. In dem dargestellten Ausführungsbeispiel sind vier Mitnehmergruppen 211, 212, 213, 214 mit jeweils vier Mitnehmern 231, 232, 233, 234 vorgesehen. Die Erfindung umfasst aber auch Wurfrotoren 21 mit mehr oder weniger Mitnehmern 231, 232, 233, 234 pro Mitnehmergruppe 211, 212, 213, 214 und/oder mit mehr oder weniger Mitnehmergruppen 211, 212, 213, 214. Es sollten aber zumindest zwei Mitnehmergruppen 211, 212, 213, 214 mit jeweils zumindest zwei Mitnehmern 231, 232, 233, 234 vorgesehen sein.

Die Mitnehmergruppen 211, 212, 213, 214 sind in einer Drehrichtung 32 um eine Drehachse 3, um die der Wurfrotor 21 konzentrisch angeordnet ist, gleichmäßig verteilt angeordnet. Sie weisen einen Versatzwinkel 41, hier von 90°, in Drehrichtung 32 zueinander auf. Daher wird Erntegut 8, das mit den Mitnehmern 231, 232, 233, 234 benachbarter Mitnehmergruppen 211, 212, 213, 214 transportiert wird, jeweils mit einem zeitlichen Versatz ausgeworfen, der dem Zeitraum entspricht, den der Wurfrotor 21 für eine Viertelumdrehung benötigt.

An einem in einer axialen Richtung 31 der Drehachse 3 oberen Ende 201 ist am Wurfrotor 21 ein Befestigungsflansch 251 vorgesehen. Zudem weist der Wurfrotor 21 an einem in der axialen Richtung 31 unteren Ende 202 einen Rotorboden 210 auf. Der Rotorboden 210 sowie der Befestigungsflansch 251 begrenzen einen Auswurfraum 20 für das vom Wurfrotor 21 zu verteilende Erntegut 8 in und gegen eine axiale Richtung 31 der Drehachse 3. Zum Aufnehmen des Ernteguts 8 und zum Auswerfen des Ernteguts 8 weisen die Mitnehmer 231, 232, 233, 234 eine bogenförmige Wurfkante 24 auf. Sie sind plattenförmig ausgebildet und quer zur axialen Richtung 31 angeordnet. An einem offenen, achsabgewandten Wurfende 240 sind sie abgerundet ausgebildet.

Die Mitnehmer 231, 232, 233, 234 sind zwischen dem Rotorboden 210 und dem Befestigungsflansch 251 drehfest befestigt. Dafür weisen sie jeweils eine Durchgangsbohrung 230 auf. Für jede Mitnehmergruppe 211, 212, 213, 214 ist jeweils ein Befestigungssteg 26 vorgesehen, der die Durchgangsbohrung 230 der Mitnehmer 231, 232, 233, 234 derselben Mitnehmergruppe 211, 212, 213, 214 durchsetzt. Der Befestigungssteg 26 ist in radialer Richtung 33 der Drehachse 3 zu dieser versetzt. Er erstreckt sich parallel der Drehachse 3. Dabei weisen die Befestigungsstege 26 des Wurfrotors 21 denselben Befestigungsabstand 262 zur Drehachse 3 auf. Um die gleichmäßige Verteilung der Mitnehmergruppen 211, 212, 213, 214 um die Drehachse 3 zu gewährleisten, sind die Befestigungsstege 26 gleichmäßig um die Drehachse 3 verteilt angeordnet.

Der Befestigungssteg 26 erstreckt sich konzentrisch um eine Befestigungsachse 260. Die Mitnehmer 231, 232, 233, 234 derselben Mitnehmergruppe 211, 212, 213, 214 sind an dem Befestigungssteg 26 drehfest befestigt. In axialer Richtung 31 weisen die Mitnehmer 231, 232, 233, 234 denselben Abstand A voneinander auf. Daher kann mit jedem der Mitnehmer 231, 232, 233, 234 etwa dieselbe Menge Erntegut 8 transportiert werden.

Zum Befestigen des Wurfrotors 21 an der Drehwelle 30 weist der Wurfrotor 21 einen zweiten Befestigungsflansch 252 auf, der vom Rotorboden 210 beabstandet ist. Zwischen dem Rotorboden 210 und dem zweiten Befestigungsflansch 252 ist eine hohlzylindrisch ausgebildete Befestigungshülse 27 vorgesehen, die die Drehwelle 30 vor Staub und Feuchtigkeit schützt. In einem montierten Zustand (s. Fig. 4) des Wurfrotors 21 durchsetzt die Drehwelle 30 die Befestigungshülse 27 vollständig. Der Wurfrotor 21 wird bevorzugt an der Drehwelle 30 befestigt, indem der Rotorboden 210, beispielsweise mittels einer Schraube (nicht bezeichnet), an die Drehwelle 30 angeschraubt wird.

Die Mitnehmer 231, 232, 233, 234 jeder Mitnehmergruppe 211, 212, 213, 214 sind jeweils um denselben Auswurfdrehwinkel 42 um die Drehachse 3 zu ihrem benachbarten Mitnehmer 231, 232, 233, 234 verdreht angeordnet. Dies zeigt Fig. 2 (b).

Durch den Auswurfdrehwinkel 42 wird das von einem Mitnehmer 231, 232, 233, 234 transportierte Erntegut 8 verschieden lange im Wurfrotor 21 gehalten. Ein Mitnehmer 231, 232, 233, 234 mit flachem Auswurfdrehwinkel 42 hält das Erntegut 8 weniger lang im Wurfrotor 21 als ein Mitnehmer 231, 232, 233, 234 mit steilem Auswurfdrehwinkel 42.

Im Folgenden wird als Bezugslinie B zur Beurteilung des Auswurfdrehwinkels 42 eine fiktive, die Drehachse 3 mit der Befestigungsachse 260 verbindende Linie bezeichnet. Als flacher Auswurfdrehwinkel 42 im Sinne der Erfindung wird ausgehend von der Bezugslinie B ein Winkel > 0° in Befestigungsrichtung 261 um die Befestigungsachse 260 bezeichnet. Als steiler Auswurfdrehwinkel 42 im Sinne der Erfindung wird ausgehend von der Bezugslinie B ein Winkel < 0° in Befestigungsrichtung 261 um die Befestigungsachse 260 bezeichnet. Um das Erntegut 8 einerseits ausreichend lange im Wurfrotor 21 zu halten, und andererseits ein Auswerfen des Ernteguts 8 aus dem Wurfrotor 21 sicher zu stellen, sind hier spitze Winkel als Auswurfdrehwinkel 42 gewählt. Die zeitliche Dauer, in der die Mitnehmer 231, 232, 233, 234 das Erntegut 8 im Wurfrotor 21 halten, ist daher mit dem Auswurfdrehwinkel 42 einstellbar.

Erkennbar ist, dass die zweiten Mitnehmer 232 der Mitnehmergruppen 211, 212, 213, 214 entlang der Bezugslinie B ausgerichtet sind. Die ersten Mitnehmer 211 sind hingegen steil angeordnet, so dass sie das Erntegut 8 länger als die zweiten Mitnehmer 232 im Wurfrotor 21 halten. Die dritten Mitnehmer 233 sind flacher als die zweiten Mitnehmer 232 angeordnet und halten das Erntegut 8 daher weniger lang als diese. Die vierten Mitnehmer 234 schließlich sind um den Auswurfdrehwinkel 42 flacher als die dritten Mitnehmer 233 angeordnet. Sie halten das Erntegut 8 daher weniger lang als diese, und noch weniger lang als die zweiten Mitnehmer 232.

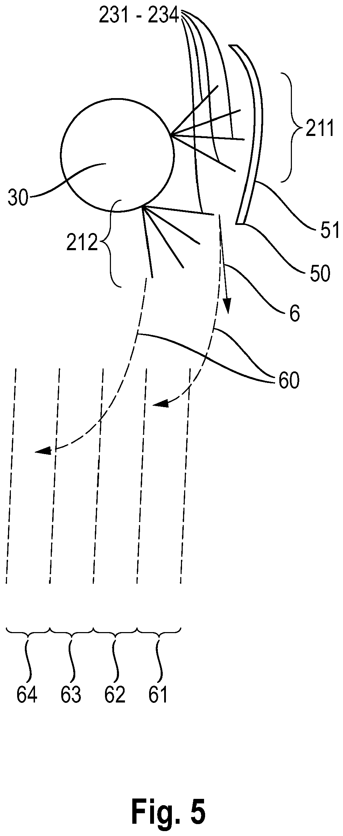

Da der Zeitpunkt, an dem das Erntegut 8 aus dem Wurfrotor 21 ausgeworfen wird, einen Drehwinkel (nicht gezeigt) um die Drehachse 3 bestimmt, in dem es ausgeworfen wird, beeinflusst der Auswurfdrehwinkel 42 auch eine Auswurfrichtung 6 (s. Fig. 5), in der es ausgeworfen wird.

Die Anordnung der Mitnehmer 231, 232, 233, 234 relativ zueinander wiederholt sich hier zudem für jede der Mitnehmergruppen 211, 212, 213, 214. Dadurch verteilt sich das mit den Mitnehmern 231, 232, 233, 234 der Mitnehmergruppen 211, 212, 213, 214 ausgeworfene Erntegut 8 jeweils in gleicher Weise am Boden 84.

Das Erntegut 8 löst sich in einem Drehwinkel 32 zur Drehachse 3 vom Wurfrotor 21. Es fliegt dann auf einer Wurfbahn 60 (s. Fig. 5) in verschiedene Einwurfbereiche 61, 62, 63, 64 (s. Fig. 5) auf den Boden 84. Daher wird das Erntegut 8 aufgefächert am Boden 84 abgelegt. Da die benachbarten Mitnehmer 231, 232, 233, 234 hier jeweils um denselben Auswurfdrehwinkel 42 zueinander versetzt angeordnet sind, grenzen die Einwurfbereiche 61, 62, 63, 64 benachbarter Mitnehmer 231, 232, 233, 234 derselben Mitnehmergruppe 211, 212, 213, 214 aneinander an. Dadurch wird auch bei feuchten Erntebedingungen, und daher feuchtem Erntegut 8, eine gleichmäßige Verteilung des Ernteguts 8 am Boden 84 gewährleistet.

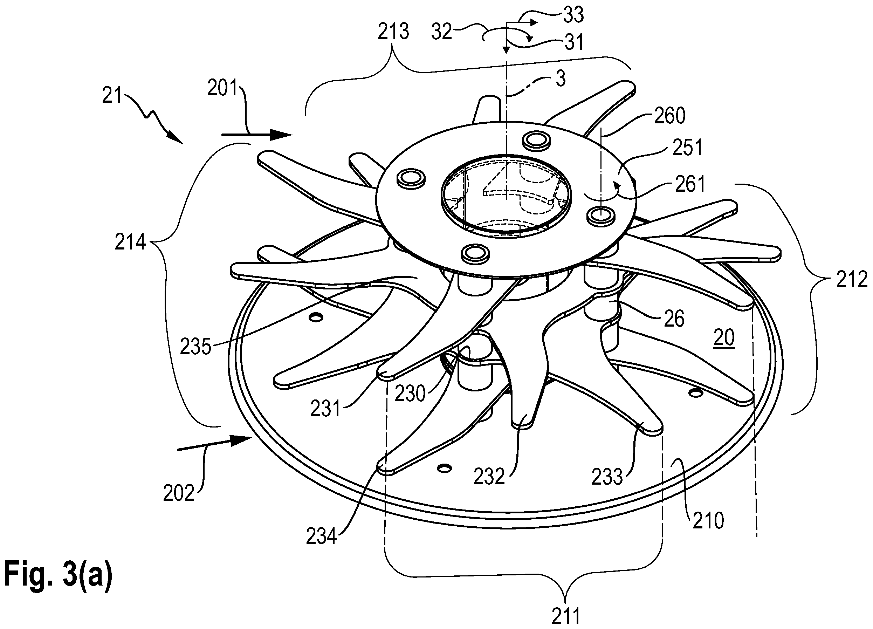

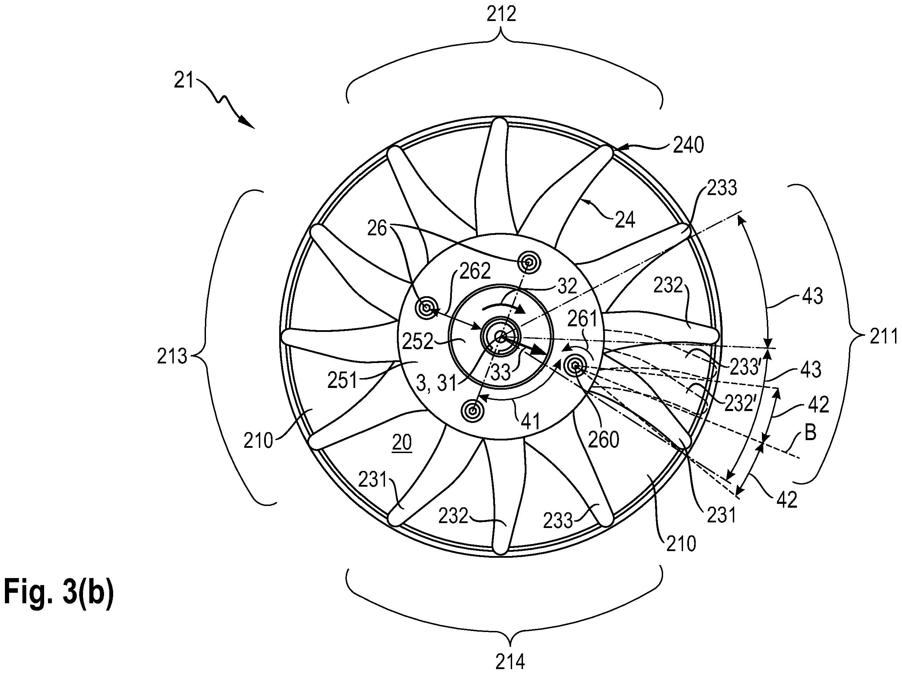

Fig. 3 zeigt in (a) und (b) eine weitere Ausführungsform eines erfindungsgemäßen Wurfrotors 21. Auch dieser Wurfrotor 21 weist vier Mitnehmergruppen 211, 212, 213, 214 mit jeweils vier Mitnehmern 231, 232, 233, 234 auf. Auch bei dieser Ausführungsform ist für jede der Mitnehmergruppen 211, 212, 213, 214 ein Befestigungssteg 26 vorgesehen. Die Befestigungsstege 26 erstrecken sich entlang einer Befestigungsachse 260 und parallel zur Drehachse 3, sind um denselben Befestigungsabstand 262 von dieser beabstandet und gleichmäßig um die Drehachse 3 verteilt angeordnet. Die Mitnehmer 231, 232, 233, 234 sind an den Befestigungsstegen 26 drehfest befestigt.

Dafür weist auch dieser Wurfrotor 21 an seinem in axialer Richtung 31 oberen Ende 201 den Befestigungsflansch 251 auf. Zudem weist er an seinem in axialer Richtung 31 unteren Ende 202 den Rotorboden 210 auf. Der Rotorboden 210 sowie der Befestigungsflansch 251 begrenzen den Auswurfraum 20 für das Erntegut 8 in und gegen die axiale Richtung 31. Die Mitnehmer 231, 232, 233, 234 weisen auch bei dieser Ausführungsform die bogenförmige Wurfkante 24 auf. Sie sind ebenfalls plattenförmig ausgebildet und erstrecken sich quer zur axialen Richtung 31. An ihrem offenen, achsabgewandten Wurfende 240 sind sie abgerundet ausgebildet.

Weiterhin weist der Wurfrotor 21 den zweiten, vom Rotorboden 210 beabstandeten Befestigungsflansch 252 auf, sowie die zwischen dem Rotorboden 210 und dem zweiten Befestigungsflansch 252 vorgesehene Befestigungshülse 27. Im montierten Zustand (s. Fig. 4) durchsetzt auch hier die Drehwelle 30 die Befestigungshülse 27 vollständig.

Aufgrund ihres analogen Aufbaus sind die Wurfrotoren 21 in einer Gutverteileinrichtung 1 (s. Fig. 4) austauschbar.

Im Gegensatz zur Ausführungsform der Fig. 2 sind die Mitnehmer 231, 232, 233, 234 hier aber nicht nur um den Auswurfdrehwinkel 42 oder ein Vielfaches davon zueinander verdreht angeordnet. Sondern die Mitnehmer 231, 232, 233, 234 derselben Mitnehmergruppe 211, 212, 213, 214 sind zudem um einen Befestigungswinkel 43 um die Drehachse 3 zueinander verdreht angeordnet.

Dies ist schematisch in Fig. 3 (b) gezeigt. Fig. 3 (b) zeigt den relativ zum ersten Mitnehmer 231 der ersten Mitnehmergruppe 211 um den Auswurfdrehwinkel 42, sowie den um den doppelten Auswurfdrehwinkel 42 um die Befestigungsachse 260 in Befestigungsrichtung 261 verdrehten zweiten Mitnehmer 231' und dritten Mitnehmer 232' der ersten Mitnehmergruppe 211 in gestichelten Linien. Dargestellt sind auch die relativ zum ersten Mitnehmer 231 der ersten Mitnehmergruppe 211 zusätzlich um den Befestigungswinkel 43 um die Drehachse 3, hier gegen die Drehrichtung 32, gedrehten zweiten Mitnehmer 232 und dritten Mitnehmer 233 der ersten Mitnehmergruppe 211.

Anhand der schematisch dargestellten zweiten und dritten Mitnehmer 232, 233, die gegenüber dem ersten Mitnehmer 231 nur um den Auswurfdrehwinkel 42 beziehungsweise den doppelten Auswurfdrehwinkel 42 um die Befestigungsachse 26 verdreht angeordnet sind, ist auch hier die Stellung der Mitnehmer 231, 232, 233, 234 relativ zur Bezugslinie B erkennbar.

Auch hier sind die zweiten Mitnehmer 232 der Mitnehmergruppen 211, 212, 213, 214 entlang der Bezugslinie B ausgerichtet. Die ersten Mitnehmer 231 und vierten Mitnehmer 234 sind hingegen steil angeordnet, so dass sie das Erntegut 8 länger als die zweiten Mitnehmer 232 im Wurfrotor 21 halten. Die dritten Mitnehmer 233 sind flacher als die zweiten Mitnehmer 232 angeordnet und halten das Erntegut 8 daher weniger lang als diese.

Der Befestigungsdrehwinkel 43 beträgt hier 30°. In der perspektivischen Ansicht der Fig. 3 (a) ist erkennbar, dass jeweils zwei Mitnehmer 231, 232, 233, 234 jeder Mitnehmergruppe 211, 212, 213, 214 in demselben Drehwinkel zur Drehachse 3 angeordnet, und daher in axialer Richtung 31 übereinander, angeordnet sind. Das sind hier der erste und der vierte, und daher letzte, Mitnehmer 231, 234 jeder Mitnehmergruppe 211, 212, 213, 214. In einer Draufsicht auf den Wurfrotor 21 sind die Mitnehmer 231, 232, 233, 234 daher in Drehrichtung 32 um die Drehachse 3 gleichmäßig verteilt angeordnet. Dabei sind die jeweils vierten Mitnehmer 234 jeder Mitnehmergruppe 211, 212, 213, 214 in der Draufsicht auf den Wurfrotor 21 nicht sichtbar.

Aufgrund der gleichmäßigen Verteilung der Mitnehmer 231, 232, 233, 234 erfolgt ein Verteilen des Ernteguts 8 hier daher nicht schubweise. Sondern das Erntegut 8 wird während der Drehung des Wurfrotors 21 kontinuierlich ausgeworfen.

Da die zweiten und dritten Mitnehmer 232, 233 gegenüber den ersten und vierten Mitnehmern 231, 234 um den Befestigungswinkel 43 um die Drehachse 3 gegen die Drehrichtung 32 gedreht sind, unterscheidet sich die Befestigung dieses Wurfrotors 21 von der des Wurfrotors 21 der Fig. 2. Alle zweiten Mitnehmer 232 und alle dritten Mitnehmer 233 sind hier einstückig miteinander gefertigt. Sie sind hier dafür an einem Befestigungsring 235 angeordnet. Die Durchgangsbohrungen 230 sind in dem Befestigungsring 235 vorgesehen. Es hat sich gezeigt, dass diese Befestigung der Mitnehmer 232, 233 besonders robust ist.

Die Anordnung der Mitnehmer 231, 232, 233, 234 relativ zueinander wiederholt sich auch bei diesem Wurfrotor 21 für jede der Mitnehmergruppen 211, 212, 213, 214, so dass das Erntegut 8 mit den Mitnehmern 231, 232, 233, 234 der Mitnehmergruppen 211, 212, 213, 214 jeweils in gleicher Weise am Boden 84 verteilt wird.

Es hat sich gezeigt, dass dieser Wurfrotor 21 das Erntegut 8, insbesondere feuchtes Erntegut 8, nicht nur sehr gleichmäßig auswirft, sondern dass das Erntegut 8 zudem sehr locker am Boden 84 verteilt wird.

Fig. 4 zeigt eine Gutverteileinrichtung 1 für eine selbstfahrende Erntemaschine 10, insbesondere für einen Mähdrescher, mit zwei Wurfrotoren 21, 22 der in den Fig. 2 (a) und (b) gezeigten Ausführungsform.

Die beiden Wurfrotoren 21, 22 sind in gegensätzliche Drehrichtungen 32 zueinander drehbar vorgesehen. Fig. 4 (a) und (b) zeigen die Gutverteilvorrichtung 1 in einer perspektivischen Darstellung. Dabei ist bei einem ersten der beiden Wurfrotoren 21 der Rotorboden 210 in Fig. 4 (b) nicht dargestellt. Dadurch ist der Auswurfraum 20 dieses Wurfrotors 21 unmittelbar einsehbar, so dass die Mitnehmer 231, 232, 233, 234 erkennbar sind. Fig. 4 (c) zeigt die Gutverteilvorrichtung 1 in einer Draufsicht gegen die axiale Richtung 31 von unten. Bei dieser Darstellung sind die Rotorböden 210 beider Wurfrotoren 21, 22 nicht dargestellt, so dass die Mitnehmer 231, 232, 233, 234 beider Wurfrotoren 21, 22 erkennbar sind.

Die Gutverteileinrichtung 1 weist eine Abdeckfläche 78 auf, an deren Unterseite 781 die beiden Wurfrotoren 21, 22 angeordnet sind. Die Wurfrotoren 21, 22 erstrecken sich von der Abdeckfläche 78 aus in axialer Richtung 31. Sie sind jeweils an in Drehrichtung 32 antreibbaren Drehwellen 30 drehfest befestigt. Sie sind in einer radialen Richtung 33 der Drehachsen 3 voneinander beabstandet. Die Drehachsen 3 erstrecken sich in axialer Richtung 31 quer zur Abdeckfläche 78.

Zwischen den Wurfrotoren 21, 22 sind Leitbleche 5 zum Führen von Erntegut 8 angeordnet. Auch die Leitbleche 5 erstrecken sich quer zur Abdeckfläche 78.

Jedem der Wurfrotoren 21, 22 ist ein Wandungsleitblech 51, 52 zugeordnet, dass seinen Wurfrotor 21, 22 zumindest teilweise etwa konzentrisch umgibt. Die Wandungsleitbleche 51, 52 begrenzen den Auswurfraum 20 ihres Wurfrotors 21, 22 in radialer Richtung 33.

Die beiden Wurfrotoren 21, 22, ihre beiden Wandungsleitbleche 51, 52 und die weiteren zwischen den Wurfrotoren 21, 22 angeordneten Leitbleche 5 sind spiegelsymmetrisch zu einer fiktiven Mittellinie 79 (s. Fig. 4 (c)) angeordnet.

Das Erntegut 8 wird von einer Strömungsseite 80 aus in die Wurfrotoren 21, 22, sowie zwischen die Leitbleche 5 und die Wandungsleitbleche 51, 52 gefördert. In den Wurfrotoren 21, 22 wird es mit den Mitnehmern 231, 232, 233, 234 mitgenommen und beschleunigt.

Aufgrund des Versatzes der Mitnehmer 231, 232, 233, 234 um den Auswurfdrehwinkel 42 oder das Vielfache davon wird das Erntegut 8 verschieden lang in den Wurfrotoren 21, 22 gehalten. Die in axialer Richtung 31 vorderen Mitnehmer 231, 232, 233, 234 werfen es später aus, als die in axialer Richtung 31 hinteren Mitnehmer231, 232, 233, 234. Bei der hier dargestellten Anordnung der Mitnehmer 231, 232, 233, 234 löst sich das Erntegut 8 daher von den ersten Mitnehmern 231 am langsamsten, und von den vierten Mitnehmern 231, 232, 233, 234 am schnellsten. Da die benachbarten Mitnehmer 231, 232, 233, 234 jeweils um denselben Auswurfdrehwinkel 42 zueinander versetzt sind, wird das Erntegut 8 in benachbarte Einwurfbereiche 61 - 64 am Boden 84 eingeworfen. Dies zeigt Fig. 5 schematisch.

Die Wandungsleitbleche 51, 52 sind verstellbar vorgesehen. Sie sind hier zweiteilig ausgebildet, wobei eine Abrisskante 50, an dem sich das Erntegut 8 vom Wurfrotor 21 löst, jeweils an einem ersten Blechteil (nicht bezeichnet) des Wandungsleitbleches 51, 52 entlang einem zweiten Blechteil (nicht bezeichnet) des Wandungsleitbleches 51, 52 in und gegen die Drehrichtung 32 um die Drehachse 3 verschiebbar vorgesehen ist. Die ersten Blechteile der Wandungsleitbleche 51, 52 weisen dafür eine Führungsnut 522 auf, in die ein Führungssteg 521 eingreift, der an den zweiten Blechteilen der Wandungsleitbleche 51, 52 angeordnet ist.

Fig. 5 zeigt schematisch einen Wurfrotor 21 mit mehreren in Mitnehmergruppen 211, 212 gruppierten Mitnehmern 231, 232, 233, 234, von denen hier zwei Mitnehmergruppen 211, 212 dargestellt sind. Sichtbar ist zudem das Wandungsleitblech 51 mit seiner stromabwärts angeordneten Abrisskante 50.

Schematisch dargestellt sind Auswurfrichtungen 6, in denen das Erntegut 8 aus dem Wurfrotor 21 ausgeworfen wird. Zudem sind die räumlich zueinander versetzten Wurfbahnen 60, in denen das Erntegut 8 auf den Boden 84 geworfen wird, nachdem es sich von den Mitnehmern 231, 232, 233, 234 gelöst hat, dargestellt. Die Einwurfbereiche 61, 62, 63, 64 am Boden 84 sind ebenfalls schematisch gezeigt. Sie sind hier nebeneinander angeordnet.

### Bezugszeichenliste

- 1: Gutverteileinrichtung
- 10: Mähdrescher
- 11: Vorsatzgerät
- 12: Strohhäcksler
- 20: Auswurfraum
- 201: Oberes Ende
- 202: Unteres Ende
- 210,220: Rotorboden
- 21: Erster Wurfrotor
- 211, 212, 213, 214: Erste - vierte Mitnehmergruppe
- 22: Zweiter Wurfrotor
- 221, 222, 223, 224: Erste - vierte Mitnehmergruppe
- 230: Durchgangsbohrung
- 231, 232, 233, 234: Erste - vierte Mitnehmer
- 232', 233': Um den Auswurfdrehwinkel oder ein Vielfaches dessen gedrehter zweiter / dritter Mitnehmer
- 24: Wurfkante
- 240: Wurfende
- 251: Erster Befestigungsflansch
- 252: Zweiter Befestigungsflansch
- 26: Befestigungssteg
- 260: Befestigungsachse
- 261: Befestigungsrichtung
- 262: Befestigungsabstand
- 27: Befestigungshülse
- 3: Drehachse
- 30: Drehwelle
- 31: Axiale Richtung
- 32: Drehrichtung
- 33: Radiale Richtung
- 41: Versatzwinkel
- 42: Auswurfdrehwinkel
- 5: Leitblech
- 50: Abrisskante
- 51, 52: Erstes, zweites Wandungsleitblech
- 521: Führungssteg
- 522: Führungsnut
- 6: Auswurfrichtung
- 60: Auswurfbahn
- 61 - 64: Erster - vierter Einwurfbereich
- 78: Gehäusedecke
- 7: Korntank
- 70: Förderrichtung
- 71: Erntegutstrom
- 72: Körner oder Früchte
- 73: Korn-Spreu- Gemisch
- 74: Spreu und Halmteile
- 75: Restkörner oder Restfrüchte
- 76: Halmgut
- 77: Stroh, Halme
- 78: Abdeckfläche
- 781: Unterseite
- 79: Mittellinie
- 8: Erntegut
- 80: Strömungsseite
- 81: Front des Mähdreschers
- 82: Heck des Mähdreschers
- 83: Fahrtrichtung des Mähdreschers
- 84: Boden
- 90: Überkehrelevator
- 91: Schrägförderer
- 92: Dresch- und Trenneinrichtung
- 921: Vorbeschleunigungstrommel
- 922: Dreschtrommel
- 923: Abscheidekorb
- 93: Erstes Aggregat, Reinigungsvorrichtung, Siebkasten
- 931: Sieb
- 94: Strohwendetrommel
- 95: Kornelevator
- 96: Restkornabscheidung, Schüttler
- 971: Rücklaufboden
- 972: Vorbereitungsboden
- 973: Gebläse
- A: Abstand
- B: Bezugslinie

## Patentansprüche

1. Wurfrotor (21, 22) für eine Gutverteileinrichtung (1) einer selbstfahrenden Erntemaschine (10), der um eine Drehachse (3) in eine Drehrichtung (32) drehbar ist, wobei der Wurfrotor (21, 22) Mitnehmer (231, 232, 233, 234) aufweist, die zum Beschleunigen von Erntegut (8), insbesondere von gehäckseltem Erntegut, vorgesehen und drehfest um die Drehachse (3) verteilt angeordnet sind, wobei die Mitnehmer (231, 232, 233, 234) in Mitnehmergruppen (211, 212, 213, 214) gruppiert sind, die gleichmäßig um die Drehachse (3) verteilt angeordnet sind,
**dadurch gekennzeichnet, dass**
jeweils die Mitnehmer (231, 232, 233, 234) derselben Mitnehmergruppe (211, 212, 213, 214) in eine Befestigungsrichtung (261) um eine Befestigungsachse (260) zu ihrem in axialer Richtung (31) benachbarten Mitnehmer (231, 232, 233, 234) um einen Auswurfdrehwinkel (42) oder um ein Vielfaches des Auswurfdrehwinkels (42) verdreht angeordnet sind.

2. Wurfrotor (21, 22) nach Anspruch 1, **dadurch gekennzeichnet, dass** jeder Mitnehmergruppe (211, 212, 213, 214) eine Befestigungsachse (260) zugeordnet ist, wobei die Befestigungsachsen (260) in Drehrichtung (32) um die Drehachse (3) gleichmäßig verteilt angeordnet, und von der Drehachse (3) um denselben Befestigungsabstand (262) beabstandet sind.

3. Wurfrotor (21, 22) nach einem der vorherigen Ansprüche, **dadurch gekennzeichnet, dass** die Mitnehmer (231, 232, 233, 234) der Mitnehmergruppen (211, 212, 213, 214) jeweils an einem Befestigungssteg (26) drehfest befestigt sind, der sich entlang ihrer Befestigungsachse (260) erstreckt.

4. Wurfrotor (21, 22) nach einem der vorherigen Ansprüche, **dadurch gekennzeichnet, dass** die Mitnehmer (231, 232, 233, 234) derselben Mitnehmergruppe (211, 212, 213, 214) zudem um einen Befestigungswinkel (43) um die Drehachse (3) zueinander verdreht angeordnet sind.

5. Wurfrotor (21, 22) nach einem der vorherigen Ansprüche, **dadurch gekennzeichnet, dass** die Mitnehmer (231, 232, 233, 234) derselben Mitnehmergruppe (211, 212, 213, 214) in einer axialen Richtung (31) der Drehachse (3) um denselben Abstand (A) voneinander beabstandet sind.

6. Wurfrotor (21, 22) nach einem der vorherigen Ansprüche, **dadurch gekennzeichnet, dass** sich eine Anordnung der Mitnehmer (231, 232, 233, 234) derselben Mitnehmergruppe (211, 212, 213, 214) relativ zueinander für jede der Mitnehmergruppen (211, 212, 213, 214) wiederholt.

7. Wurfrotor (21, 22) nach Anspruch 3, **dadurch gekennzeichnet, dass** mehrere Mitnehmer (231, 232, 233, 234) derselben Mitnehmergruppe (211, 212, 213, 214) und/oder mehrere Mitnehmer (231, 232, 233, 234) benachbarter Mitnehmergruppen (211, 212, 213, 214) in demselben Drehwinkel der Drehachse angeordnet sind, so dass sie in axialer Richtung (31) übereinander angeordnet sind.

8. Wurfrotor (21, 22) nach einem der vorherigen Ansprüche, **dadurch gekennzeichnet, dass** die Mitnehmer (231, 232, 233, 234) des Wurfrotors (21, 22) in einer Draufsicht auf den Wurfrotor (21, 22) in Drehrichtung (32) gleichmäßig verteilt angeordnet sind.

9. Wurfrotor (21, 22) nach einem der vorherigen Ansprüche, **dadurch gekennzeichnet, dass** die Mitnehmer (231, 232, 233, 234) plattenförmig ausgebildet sind.

10. Wurfrotor (21, 22) nach einem der vorherigen Ansprüche, **dadurch gekennzeichnet, dass** die Mitnehmer (231, 232, 233, 234) eine Wurfkante (24) aufweisen, die bogenförmig ausgebildet ist.

11. Wurfrotor (21, 22) nach einem der vorherigen Ansprüche, **dadurch gekennzeichnet, dass** er an einem in axialer Richtung (31) oberen Ende (201) einen Befestigungsflansch (251) und an einem in axialer Richtung (31) unteren Ende (202) einen Rotorboden (210, 220) aufweist, die einen Auswurfraum (20) für das Erntegut (8) begrenzen, wobei die Mitnehmer (231, 232, 233, 234) zwischen dem Rotorboden (210, 220) und dem Befestigungsflansch (251) angeordnet sind.

12. Wurfrotor (21, 22) nach einem der vorherigen Ansprüche, **dadurch gekennzeichnet, dass** ihm ein Wandungsleitblech (51, 52) zugeordnet ist, das eine schräge Abrisskante (50) für das Erntegut (8) aufweist, die sich in einem Winkel (54) zu einer parallel der axialen Richtung (31) verlaufenden Linie (53) erstreckt.

13. Gutverteileinrichtung (1) für eine selbstfahrende Erntemaschine (10), insbesondere einen Mähdrescher, mit zumindest einem Wurfrotor (21, 22) nach einem der vorherigen Ansprüche.

14. Gutverteileinrichtung (1) nach Anspruch 13, **dadurch gekennzeichnet, dass** er zwei Wurfrotoren (21, 22) nach einem der vorherigen Ansprüche aufweist, die in gegensätzliche Drehrichtungen (32) zueinander drehbar sind.

15. Selbstfahrende Erntemaschine (10), insbesondere Mähdrescher, mit einer Gutverteileinrichtung (1) nach einem der Ansprüche 13 - 14.

## Claims

1. Spreading rotor (21, 22) of a material distribution device (1) for a self-propelled harvesting machine (10), which is rotatable about an axis of rotation (3) in a direction of rotation (32), wherein the spreading rotor (21, 22) has drivers (231, 232, 233, 234) which are provided for accelerating harvested material (8), in particular finely chopped harvested material, and are arranged distributed around the axis of rotation (3) in a rotatably fixed manner, wherein the drivers (231, 232, 233, 234) are grouped into driver groups (211, 212, 213, 214) which are arranged uniformly distributed around the axis of rotation (3),
**characterized in that**
in each case the drivers (231, 232, 233, 234) of the same driver group (211, 212, 213, 214) are arranged turned in a fastening direction (261) about a fastening axis (260) by a discharge angle of rotation (42) or by a multiple of the discharge angle of rotation (42) with respect to the driver adjacent in the axial direction (31).

2. Spreading rotor (21, 22) according to claim 1, **characterized in that** a fastening axis (260) is allocated to each driver group (211, 212, 213, 214), wherein the fastening axes (260) are arranged uniformly distributed around the axis of rotation (3) in the direction of rotation (32), and are spaced apart from the axis of rotation (3) by the same fastening distance (262).

3. Spreading rotor (21, 22) according to one of the preceding claims, **characterized in that** the drivers (231, 232, 233, 234) of the driver groups (211, 212, 213, 214) are each fastened in a rotatably fixed manner to a fastening bar (26), which extends along the fastening axis (260) thereof.

4. Spreading rotor (21, 22) according to one of the preceding claims, **characterized in that** the drivers (231, 232, 233, 234) of the same driver group (211, 212, 213, 214) are additionally arranged turned about the axis of rotation (3) by a fastening angle (43).

5. Spreading rotor (21, 22) according to one of the preceding claims, **characterized in that** the drivers (231, 232, 233, 234) of the same driver group (211, 212, 213, 214) are spaced apart from each other by the same distance (A) in an axial direction (31) of the axis of rotation (3).

6. Spreading rotor (21, 22) according to one of the preceding claims, **characterized in that** an arrangement of the drivers (231, 232, 233, 234) of the same driver group (211, 212, 213, 214) relative to each other is repeated for each of the driver groups (211, 212, 213, 214).

7. Spreading rotor (21, 22) according to claim 3, **characterized in that** several drivers (231, 232, 233, 234) of the same driver group (211, 212, 213, 214) and/or several drivers (231, 232, 233, 234) of adjacent driver groups (211, 212, 213, 214) are arranged at the same angle of rotation of the axis of rotation such that they are arranged one over the other in the axial direction (31).

8. Spreading rotor (21, 22) according to one of the preceding claims, **characterized in that** the drivers (231, 232, 233, 234) of the spreading rotor (21, 22) are arranged uniformly distributed in the direction of rotation (32) in a top view onto the spreading rotor (21, 22).

9. Spreading rotor (21, 22) according to one of the preceding claims, **characterized in that** the drivers (231, 232, 233, 234) are formed plate-like.

10. Spreading rotor (21, 22) according to one of the preceding claims, **characterized in that** the drivers (231, 232, 233, 234) have a spreading edge (24) which is formed curved.

11. Spreading rotor (21, 22) according to one of the preceding claims, **characterized in that**, at an upper end (201) in the axial direction (31) it has a fastening flange (251) and at a lower end (202) in the axial direction (31) it has a rotor base (210, 220), which delimit a discharge space (20) for the harvested material (8), wherein the drivers (231, 232, 233, 234) are arranged between the rotor base (210, 220) and the fastening flange (251).

12. Spreading rotor (21, 22) according to one of the preceding claims, **characterized in that** it is allocated a wall deflector plate (51, 52) which has an inclined tearing edge (50) for the harvested material (8), which extends at an angle (54) to a line (53) running parallel to the axial direction (31).

13. Goods distribution device (1) for a self-propelled harvesting machine (10), in particular a combine harvester, with at least one spreading rotor (21, 22) according to one of the preceding claims.

14. Goods distribution device (1) according to claim 13, **characterized in that** it has two spreading rotors (21, 22) according to one of the preceding claims, which are rotatable in opposite directions of rotation (32) to each other.

15. Self-propelled harvesting machine (10), in particular combine harvester, with a goods distribution device (1) according to one of claims 13 - 14.

## Revendications

1. Turbine d'éparpilleur (21, 22) pour un équipement d'épandage de produit (1) d'une machine de récolte automotrice (10), laquelle est rotative dans un sens de rotation (32) autour d'un axe de rotation (3), la turbine d'éparpilleur (21, 22) comportant des moyens entraîneurs (231, 232, 233, 234) qui sont prévus pour accélérer du produit récolté (8), en particulier du produit récolté haché, et sont montés solidaires en rotation en étant répartis autour de l'axe de rotation (3), les moyens entraîneurs (231, 232, 233, 234) étant groupés en groupes de moyens entraîneurs (211, 212, 213, 214) qui sont disposés en étant répartis de manière uniforme autour de l'axe de rotation (3), **caractérisée en ce que** les moyens entraîneurs (231, 232, 233, 234) d'un même groupe de moyens entraîneurs (211, 212, 213, 214) sont chacun disposés en étant tournés, dans une direction de fixation (261) autour d'un axe de fixation (260), selon un angle de rotation d'éjection (42) ou selon un multiple de l'angle de rotation d'éjection (42) par rapport à leur moyen entraîneur voisin (231, 232, 233, 234) dans la direction axiale (31).

2. Turbine d'éparpilleur (21, 22) selon la revendication 1, **caractérisée en ce qu'**à chaque groupe de moyens entraîneurs (211, 212, 213, 214) est associé un axe de fixation (260), les axes de fixation (260) étant disposés en étant répartis de manière uniforme autour de l'axe de rotation (3) dans le sens de rotation (32), et étant distants de la même distance de fixation (262) par rapport à l'axe de rotation (3).

3. Turbine d'éparpilleur (21, 22) selon une des revendications précédentes, **caractérisée en ce que** les moyens entraîneurs (231, 232, 233, 234) des groupes de moyens entraîneurs (211, 212, 213, 214) sont chacun solidarisés en rotation sur une tige de fixation (26) qui s'étend suivant leur axe de fixation (260).

4. Turbine d'éparpilleur (21, 22) selon une des revendications précédentes, **caractérisée en ce que** les moyens entraîneurs (231, 232, 233, 234) d'un même groupe de moyens entraîneurs (211, 212, 213, 214) sont disposés en étant en outre tournés selon un angle de fixation (43) autour de l'axe de rotation (3).

5. Turbine d'éparpilleur (21, 22) selon une des revendications précédentes, **caractérisée en ce que** les moyens entraîneurs (231, 232, 233, 234) d'un même groupe de moyens entraîneurs (211, 212, 213, 214) sont distants l'un de l'autre de la même distance (A) dans une direction axiale (31) de l'axe de rotation (3).

6. Turbine d'éparpilleur (21, 22) selon une des revendications précédentes, **caractérisée en ce qu'**un agencement mutuel des moyens entraîneurs (231, 232, 233, 234) d'un même groupe de moyens entraîneurs (211, 212, 213, 214) se répète pour chacun des groupes de moyens entraîneurs (211, 212, 213, 214).

7. Turbine d'éparpilleur (21, 22) selon la revendication 3, **caractérisée en ce que** plusieurs moyens entraîneurs (231, 232, 233, 234) d'un même groupe de moyens entraîneurs (211, 212, 213, 214) et/ou plusieurs moyens entraîneurs (231, 232, 233, 234) de groupes de moyens entraîneurs voisins (211, 212, 213, 214) sont disposés selon le même angle de rotation de l'axe de rotation, de sorte que, dans la direction axiale (31), ils sont superposés.

8. Turbine d'éparpilleur (21, 22) selon une des revendications précédentes, **caractérisée en ce que**, dans une vue de dessus de la turbine d'éparpilleur (21, 22), les moyens entraîneurs (231, 232, 233, 234) de la turbine d'éparpilleur (21, 22) sont disposés en étant répartis uniformément dans le sens de rotation (32).

9. Turbine d'éparpilleur (21, 22) selon une des revendications précédentes, **caractérisée en ce que** les moyens entraîneurs (231, 232, 233, 234) sont conformés en plaques.

10. Turbine d'éparpilleur (21, 22) selon une des revendications précédentes, **caractérisée en ce que** les moyens entraîneurs (231, 232, 233, 234) comportent un bord d'éjection (24) qui est conformé de manière arquée.

11. Turbine d'éparpilleur (21, 22) selon une des revendications précédentes, **caractérisée en ce qu'**elle comporte, à une extrémité (201) supérieure dans la direction axiale (31), une bride de fixation (251) et, à une extrémité (202) inférieure dans la direction axiale (31), un fond de turbine (210, 220), lesquels délimitent un espace d'éjection (20) pour le produit récolté (8), les moyens entraîneurs (231, 232, 233, 234) étant disposés entre le fond de turbine (210, 220) et la bride de fixation (251).

12. Turbine d'éparpilleur (21, 22) selon une des revendications précédentes, **caractérisée en ce que** lui est associée une tôle déflectrice de cloison (51, 52) qui comporte, pour le produit récolté (8), un bord de rupture incliné (50) qui s'étend selon un angle (54) par rapport à une ligne (53) s'étendant parallèlement à la direction axiale (31).

13. Équipement d'épandage de produit (1) pour une machine de récolte automotrice (10), en particulier pour une moissonneuse-batteuse, comprenant au moins une turbine d'éparpilleur (21, 22) selon une des revendications précédentes.

14. Équipement d'épandage de produit (1) selon la revendication 13, **caractérisé en ce qu'**il comporte deux turbines d'éparpilleur (21, 22) selon une des revendications précédentes, lesquelles sont rotatives dans des sens de rotation (32) opposés l'un à l'autre.

15. Machine de récolte automotrice (10), en particulier moissonneuse-batteuse, comprenant un équipement d'épandage de produit (1) selon une des revendications 13-14.
